# EUROPEAN PATENT SPECIFICATION

(11) **EP 2 430 366 B1**
(45) Date of publication and mention of the grant of the patent: **09.01.2013**
(21) Application number: 10727980.4
(22) Date of filing: 06.05.2010
(51) Int. Cl.: F23J 13/08, F23L 11/00, F23L 13/06, F16K 15/02

(54) **FUME-DISCHARGE DEVICEWITH CHECK VALVE FOR BOILERS**
ABGASABFUHRVORRICHTUNG MIT RÜCKSTRÖMSPERRE FÜR KESSEL
DISPOSITIF D'ÉVACUATION DE FUMÉES AVEC UN CLAPET DE NON-RETOUR POUR CHAUDIÈRES

(30) Priority: 12.05.2009 IT PD20090131
(43) Date of publication of application: 21.03.2012
(73) Proprietor: LN 2 S.R.L. a socio unico, 62010 Montecassiano (MC) (IT)
(72) Inventor: FRATICELLI, Gabriele, I-62011 Cingoli (MC) (IT)
(74) Representative: Fabris, Stefano
(86) International application number: PCT/IT2010/000202
(87) International publication number: WO 2010/131282

(56) References cited:
- CH-A- 541 101
- DE-A1- 19 818 521
- DE-C1- 10 037 967
- DE-C1- 19 906 736

## Description

### Technical field

The present invention relates to a boiler fume discharge device, particularly for condensation boilers, having the features set out in the preamble of the main claim no. 1.

### Technological background

The device of the invention is for particular, although not exclusive, application in installations comprising a plurality of boilers operating in series with each other, or operating as a group in accordance with a configuration such that each duct for discharging the fumes of the respective boiler is connected to a single main fume-exhaust duct. In such applications, which are designed to optimise the output and management of the installation, the boilers are positioned adjacent to each other and each of them is provided with a discharge duct which extends substantially vertically and which is connected to the main discharge duct, the latter extending transversely and being dimensioned in accordance with the number and overall power of the boilers installed. In that type of installation, it may be provided that the boilers do not operate simultaneously and in that case it is necessary to ensure that the discharge fumes of the boilers that are in operation do not flow back towards the boilers that are not in operation and from there into the surrounding environment. To that end, valve devices for closing off the fumes are known which are located inside the discharge duct of each individual boiler. Those devices generally comprise a shutter member guided vertically in the discharge duct and cooperating with a valve seat to ensure the flow of the fumes in one direction and to prevent the return thereof in the opposite direction, operating substantially as a non-return valve. The valve seat is typically defined between two tubular sections which are adjacent to each other and define the discharge duct. In addition, it is known to provide in the region of one of the sections a collecting chamber having an exhaust duct, these being designed to collect and discharge the condensation water, respectively.

A known type of those devices provides a discoidal shutter body from the centre of which a rod-shaped support rises, the support cooperating with an upright guide means which is provided in the region of the valve seat and which comprises a plurality of radial fins extending, with a preselected circumferential pitch, in the direction of the main axis of the valve and defining at their free ends a plurality of respective surfaces which together define the guide cooperating with the rod-shaped shaft of the shutter. Such a device is described in the prior art document DE 19906736.

### Description of the invention

A principal object of the invention is to provide a fume-discharge device for boilers in which the structure of the means for guiding the shutter body is more simplified than the known solutions, with a consequent simplification, with reduced costs, of the stages of manufacturing and assembling the closing-off member. In addition, if the valve device is produced from plastics material, the structural simplification is also reflected in the setting-up of the moulds and equipment provided for the moulding of the components of the closing-off member and also of the valve seat.

That object is achieved by the invention by means of a fume-discharge device for boilers which is produced in accordance with the claims, which follow.

### Brief description of the drawings

Further features and advantages of the invention will emerge more clearly from the following detailed description of a preferred embodiment thereof which is illustrated by way of non-limiting example with reference to the appended drawings in which:
- Figure 1 is a side view of a device produced in accordance with the invention,
- Figures 2 and 3 are views in axial section of the device of Figure 1, in two distinct operative positions of the closing-off member,

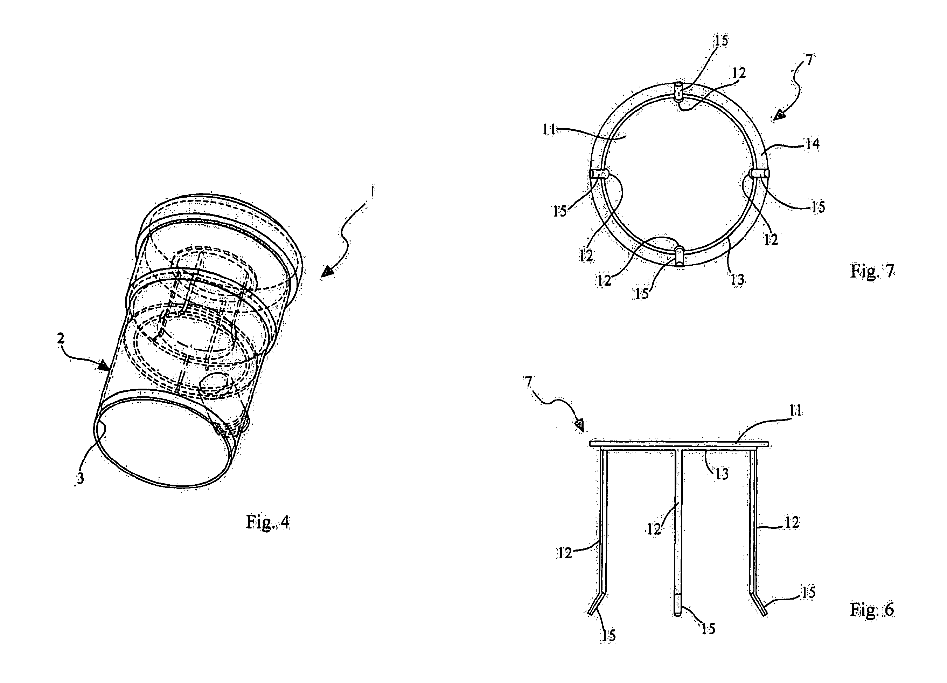

- Figure 4 is a perspective view, on a reduced scale, of the device of the previous Figures,
- Figure 5 is a perspective view of a detail of the device of the previous Figures,
- Figures 6 and 7 are side and plan views, respectively, of the detail of Figure 5.

### Preferred embodiment of the invention

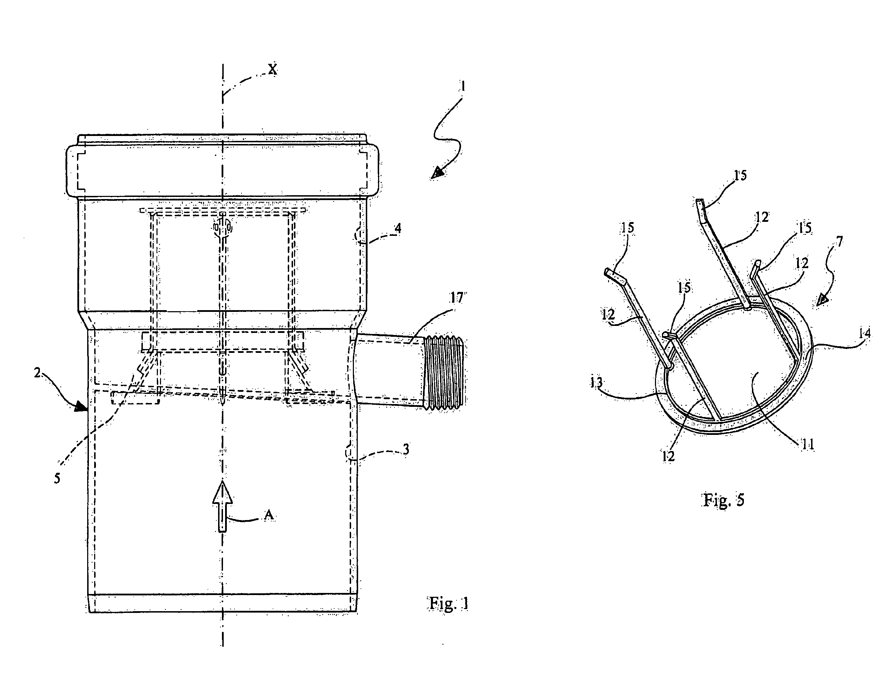

With reference to the mentioned Figures, a fume-discharge device for boilers, particularly for condensation boilers, which is produced in accordance with the present invention is generally indicated 1. The device comprises a main fume-discharge duct 2 which is substantially cylindrical in shape with a main axis X and in which are defined a first tubular section 3 for fume intake and a second section 4 for fume exhaust. The first section 3 is capable of communicating with a boiler, while the second section 4 is capable of communicating with a master fume-discharge tube (not shown), to which the discharge fumes of a possible plurality of boilers connected to each other as a group can be conveyed. In the duct 2, the fume-discharge flow is directed axially in the direction indicated by the arrow A in Figure 1.

The device also comprises a third section 5 which is interposed between the sections 3 and 4 inside the duct 2 and which includes a valve seat 6 capable of cooperating with a shutter member 7, described in detail hereinafter. The third section 5 is defined by a frustoconical tubular portion 8 which is connected to the fume-intake section 3 and which also continues coaxially as a cylindrical portion 9 which has an opening 10 with a circular cross-section defining the outflow section of the valve seat 6, in communication with the fume-exhaust section 4.

The shutter 7, which is provided to cooperate with the valve seat 6, comprises a discoidal body 11 from which four rod-shaped appendages 12 rise in the same direction. To be more precise, the appendages 12 extend parallel with each other and transversely to one of the opposite faces of the shutter, and are arranged at a regular angular pitch (pitch of 90°) starting from a circumferential edge 13 of the shutter adjacent to an annular surface 14 thereof. The surface 14 is capable of cooperating with the valve seat 6 to ensure that the latter is closed in a sealed manner.

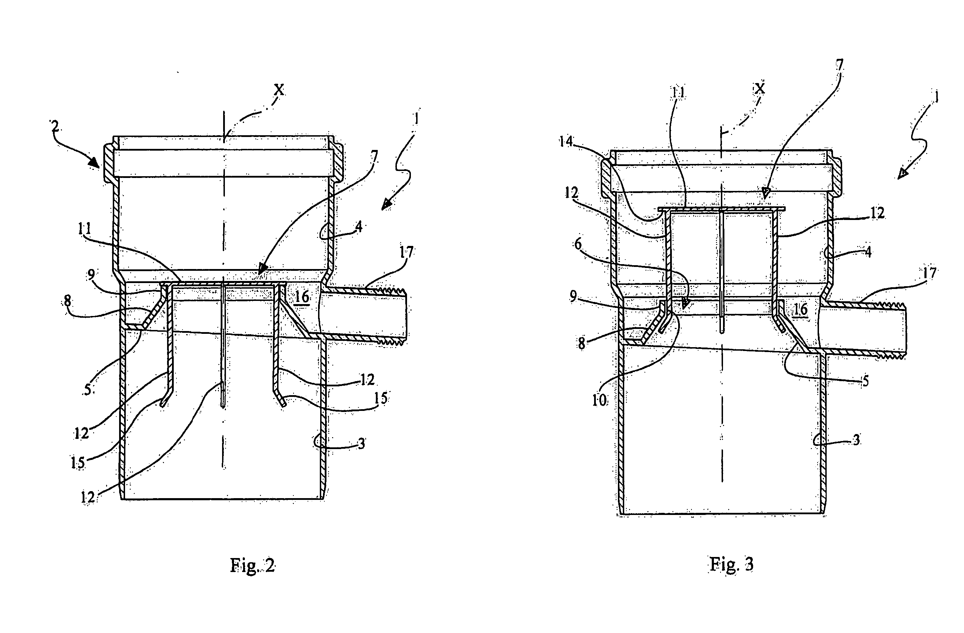

The position of the appendages 12 on the shutter body is selected in such a manner that they are capable of engaging inside the portion 9 in relative sliding contact with the cylindrical profile thereof, in order to guide the shutter 7 axially from and to the valve seat 6 coaxially with the opening 10. In other words, the appendages 12, by engaging with the cylindrical surface of the valve seat, inside the opening 10, ensure the axially guided movement of the shutter 7 from and to the position of closing off the valve seat. That position of closing the opening 10 is shown in Figure 2, while Figure 3 illustrates the position of maximum axial removal of the shutter from the valve seat.

Although the described preferred embodiment provides for four appendages, it will be appreciated that a different number of appendages may nevertheless be provided, starting from a minimum of three appendages in order to ensure positioning stability in the function of guiding the shutter in the valve seat. Also provided are means for the anti-detachment of the shutter from the valve seat which comprise, for each appendage 12, a respective portion 15 which lengthens the appendage and which extends at the free end thereof with a pre-selected inclination with respect to the direction of the axial extent. The inclined portions 15 are provided to interfere with the frustoconical surface of the portion 8 during the axial movement of the shutter, away from the valve seat, in order to prevent the disengagement thereof, as shown clearly in Figure 3.

Also provided in the fume-discharge device 1 is a volume for collecting condensation water, generally indicated 16, which is jointly defined by the sections 4 and 5 and which is placed in communication with an outlet 17 which is preferably produced integrally with the duct 2.

In operation, it is provided that, in the fume discharge phase, the flow of fumes conveyed in the direction of the arrow A urges the shutter to open the valve seat, permitting the passage of fumes to the exhaust section and from there to the master discharge tube. Whenever the boiler with which the device is associated is not in operation, the discharge fumes conveyed in the master tube are prevented from flowing back through the opening 10, in the opposite direction to the arrow A, by the closing intervention of the shutter which is urged towards the valve seat by the action of the return flow of the fumes.

The invention thus achieves the proposed objects, gaining numerous advantages over the known solutions.

A main advantage resides in the fact that the device according to the invention has a simplified structure which integrates the three tubular sections of the duct, defining the valve seat and the guide means cooperating with the shutter. The structural simplicity also makes it possible to manufacture, with simplified moulding processes and at reduced cost, the tubular body of the device, on the one hand, and the shutter body, on the other, with as much ease of assembly of the shutter in the valve seat. This therefore also enables the device to be produced in a simple manner by moulding plastics material, given that the provision of the moulds does not involve any particular complexity.

## Claims

1. A fume-discharge device for boilers, comprising a tubular main duct (2) in which a first and a second tubular section (3, 4) for fume intake and exhaust, respectively, are defined, a third section (5) being interposed between the first and the second section (3, 4) and including a valve seat (6) having an opening (10) for communication between the first and second section, a shutter member (7) being provided for cooperation with the valve seat (6) and for being moved from and to a position of closing off the valve seat (6), in order to oppose the return of the fumes in the direction towards the first section (3), means for guiding the shutter (7) being provided in the region of the valve seat (6) in order to guide, in a manner movable to a limited extent, the shutter (7) from and to the closing-off position by the action of the passage of the fumes in the duct (2),
**characterized in that** the valve opening (10) is defined at the end of a cylindrical portion (9) of the third section (5), and the shutter (7) comprises a plurality of rod-shaped appendages (12) which rise in the same direction from the shutter (7) and which are capable of engaging inside the portion (9) in relative sliding contact with the cylindrical profile thereof for the axial guiding of the shutter (7) from and to the valve seat (6) coaxially with the opening (10), and **in that**
said device comprises anti-detachment means provided between the shutter (7) and the valve seat (6) which are suitable for preventing the disengagement of the shutter (7) during the axial movement thereof away from the valve seat (6), and **in that**
said anti-detachment means comprise portions (15) which lengthen the appendages (12) and which extend at the free ends of the appendages (12) with a pre-selected inclination with respect to the direction of the axial extent of the appendage (12), in such a manner as to interfere, by means of directed surface contact, with a respective inclined surface (8) of the third tubular section (5) during the axial movement of the shutter (7) away from the valve seat (6).

2. A device according to claim 1, wherein four appendages (12) are provided which rise from the shutter (7) in the same direction with a regular angular pitch and which extend parallel with each other from a circumferential edge (13) of the shutter (7) adjacent to an annular surface (14) thereof capable of cooperating with the valve seat (6) in order to close it in a sealed manner.

3. A device according to claim 1 or 2, wherein the inclined surface capable of interfering with the appendages (12) is defined by a frustoconical wall (8) extending in the third section (5) in a position adjacent to and coaxial with the valve seat (6).

4. A device according to claim 3, wherein the respective inclined portions (15) of the respective appendages (12), capable of engaging with the frustoconical wall (8), with an anti-detachment function in respect of the shutter (7) relative to the seat (6), have the same predetermined inclination.

5. A device according to one or more of the preceding claims, wherein the second and third sections (4, 5) define a volume (16) for collecting condensation water, which is placed in communication with an outlet (17) which opens into the main duct (2).

## Patentansprüche

1. Dampfablassvorrichtung für Boiler, umfassend eine röhrenförmige Hauptleitung (2), in der ein erster und zweiter röhrenförmiger Abschnitt (3, 4) für einen Dampf-Einlass bzw. - Ausstoß definiert sind, einen dritten Abschnitt (5), der zwischen dem ersten und dem zweiten Abschnitt (3, 4) eingefügt ist, und einen Ventilsitz (6) mit einer Öffnung (10) zur Verbindung zwischen dem ersten und zweiten Abschnitt umfasst, ein Verschlusselement (7), das zum Zusammenwirken mit dem Ventilsitz (6) vorgesehen ist und von und zu einer Absperrposition des Ventilsitzes (6) bewegt wird, um das Zurückströmen der Dämpfe in die Richtung zum ersten Abschnitt (3) zu unterbinden, eine Einrichtung zum Führen des Verschlusselements (7), die im Bereich des Ventilsitzes (6) in einer bis zu einem begrenzten Maß beweglichen Weise vorgesehen ist, um das Verschlusselement (7) durch den Vorgang des Durchleitens der Dämpfe in der Hauptleitung von und zu einer Absperrposition zu führen,
**dadurch gekennzeichnet, dass** die Ventilöffnung (10) am Ende eines zylindrischen Bereichs (9) des dritten Abschnitts (5) definiert ist und das Verschlusselement (5) eine Mehrzahl von stangenförmigen Fortsätzen (12) aufweist, die sich vom Verschlusselement (7) in die gleiche Richtung erheben und die im Innern des Bereichs (9) in relativem Gleitkontakt mit dessen zylindrischem Profil zur axialen Führung des Verschlusselements (7) vom und zum Ventilsitz (6) koaxial mit der Öffnung (10) in Eingriff bringbar sind, und dadurch, dass
die Vorrichtung eine Anti-Ablösungseinrichtung aufweist, die zwischen dem Verschlusselement (7) und dem Ventilsitz (6) vorgesehen ist, die zum Verhindern des Loslösens des Verschlusselements (7) während dessen axialer weg Bewegung vom Ventilsitz (6) geeignet ist, und dadurch, dass
die Anti-Ablösungseinrichtung Bereiche (15) aufweist, die die Fortsätze (12) verlängern und die sich an den freien Enden der Fortsätze (12) mit einer vorab gewählten Neigung in Bezug auf die Richtung der axialen Erstreckung der Fortsätze (12) derart erstrecken, um störend mittels eines gerichteten Oberflächenkontakts mit einer jeweiligen geneigten Oberfläche (8) des dritten röhrenförmigen Abschnitts (5) während der axialen Bewegung des Verschlusselements (7) weg vom Ventilsitz (6) zu wirken.

2. Vorrichtung nach Anspruch 1, wobei vier Fortsätze (12) vorgesehen sind, die sich vom Verschlusselement (7) mit einer gleichmäßigen winkelförmigen Steigung in die gleiche Richtung heben und die sich parallel zueinander von einem Umfangsrand (13) des Verschlusselements (7) benachbart zu einer ringförmigen Fläche (14) davon zusammenwirkbar mit dem Ventilsitz (6) erstrecken, um diesen abgedichtet zu schließen.

3. Vorrichtung nach Anspruch 1 oder 2, wobei die geneigte Oberfläche, die auf die Fortsätze (12) störend wirkt, durch eine kegelstumpfartige Wand (8) definiert ist, die sich in den dritten Abschnitt (5) an einer Position benachbart zum und koaxial mit dem Ventilsitz (6) erstreckt.

4. Vorrichtung nach Anspruch 3 wobei die jeweiligen geneigten Bereiche (15) der jeweiligen Fortsätze (12), die mit der kegelstumpfartigen Wand (8) mit einer Anti-Ablösungsfunktion in Bezug auf das Verschlusselement (7) relativ zum Sitz (6) in Eingriff bringbar sind, die gleiche vorgegebene Neigung aufweisen.

5. Vorrichtung nach einem oder mehreren der vorhergehenden Ansprüche, wobei die zweiten und dritten Abschnitte (4, 5) ein Volumen (16) zum Sammeln von Kondensationswasser definieren, das in Verbindung mit einem Auslass (17) platziert ist, der sich in die Hauptleitung (2) öffnet.

## Revendications

1. Dispositif d'évacuation de fumées pour chaudières, comprenant un conduit principal tubulaire (2) dans lequel sont définies respectivement une première et une deuxième section tubulaire (3, 4) pour l'admission et l'échappement des fumées, une troisième section (5) étant intercalée entre la première et la deuxième section (3, 4) et comprenant un siège de soupape (6) ayant une ouverture (10) pour la communication entre les première et deuxième sections, un élément formant obturateur (7) étant prévu pour coopérer avec le siège de soupape (6) et pour être déplacé de et vers une position de fermeture du siège de soupape (6) afin de s'opposer au retour des fumées dans la direction allant vers la première section (3), des moyens pour guider l'obturateur (7) étant prévus dans la région du siège de soupape (6) afin de guider, d'une manière mobile jusqu'à une étendue limitée, l'obturateur (7) depuis et vers la position de fermeture par l'action du passage des fumées dans le conduit (2),
**caractérisé en ce que** l'ouverture de soupape (10) est définie à l'extrémité d'une partie cylindrique (9) de la troisième section (5), et l'obturateur (7) comprend une pluralité d'appendices en forme de tige (12) qui montent dans la même direction à partir de l'obturateur (7) et qui sont capables de se mettre en prise à l'intérieur de la partie (9) en contact coulissant relatif avec son profil cylindrique pour le guidage axial de l'obturateur (7) depuis et vers le siège de soupape (6) de manière coaxiale avec l'ouverture (10), et **en ce que** :
ledit dispositif comprend des moyens anti-détachement prévus entre l'obturateur (7) et le siège de soupape (6), qui sont appropriés pour empêcher le dégagement de l'obturateur (7) pendant son mouvement axial à distance du siège de soupape (6), et **en ce que** :
lesdits moyens anti-détachement comprennent des parties (15) qui rallongent les appendices (12) et qui s'étendent au niveau des extrémités libres des appendices (12) avec une inclinaison présélectionnée par rapport à la direction de l'étendue axiale de l'appendice (12), afin de ne pas interférer, au moyen du contact de surface dirigé, avec une surface inclinée (8) respective de la troisième section tubulaire (5) pendant le mouvement axial de l'obturateur (7) à distance du siège de soupape (6).

2. Dispositif selon la revendication 1, dans lequel on prévoit quatre appendices (12) qui montent à partir de l'obturateur (7) dans la même direction avec un pas angulaire régulier et qui s'étendent parallèlement entre eux à partir d'un bord circonférentiel (13) de l'obturateur (7) adjacent à sa surface annulaire (14) capable de coopérer avec le siège de soupape (6) afin de le fermer d'une manière étanche.

3. Dispositif selon la revendication 1 ou 2, dans lequel la surface inclinée capable d'interférer avec les appendices (12) est définie par une paroi tronconique (8) s'étendant dans la troisième section (5) dans une position adjacente à et coaxiale avec le siège de soupape (6).

4. Dispositif selon la revendication 3, dans lequel les parties inclinées (15) respectives des appendices (12) respectifs, capables de se mettre en prise avec la paroi tronconique (8), avec une fonction anti-détachement par rapport à l'obturateur (7) relativement au siège (6), ont la même inclinaison prédéterminée.

5. Dispositif selon une ou plusieurs des revendications précédentes, dans lequel les deuxième et troisième sections (4, 5) définissent un volume (16) pour collecter l'eau de condensation, qui est placé en communication avec une sortie (17) qui débouche dans le conduit principal (2).
